# EUROPÄISCHE PATENTSCHRIFT

(11) **EP 1 102 541 B1**
(45) Veröffentlichungstag und Bekanntmachung des Hinweises auf die Patenterteilung: **24.11.2004**
(21) Anmeldenummer: 99938044.7
(22) Anmeldetag: 26.07.1999
(51) Int. Cl.: A21D 2/18, A21D 13/08

(54) **VERWENDUNG VON ERYTHRIT UND/ODER XYLIT IN BACKMASSEN ODER TEIGEN FÜR DAUERBACKWAREN AUS MEHLEN UND/ODER STÄRKEN ALS TEILWEISER ODER VOLLSTÄNDIGER ZUCKERERSATZ**
USE OF ERYTHROL AND/OR XYLITE AS PARTIAL OR FULL SUGAR SUBSTITUTE IN BAKING MASSES OR DOUGHS FOR DRY BAKED GOODS MADE OF FLOURS AND/OR STARCHES
UTILISATION D'ERYTHRITOL ET/OU DE XYLITOL COMME SUBSTITUTS PARTIELS OU COMPLETS DU SUCRE DANS DES PATES POUR DES ARTICLES DE BOULANGERIE LONGUE CONSERVATION, PREPARES A PARTIR DE FARINES ET/OU D'AMIDONS

(30) Priorität: 24.07.1998 AT 128098
(43) Veröffentlichungstag der Anmeldung: 30.05.2001
(73) Patentinhaber: FRANZ HAAS WAFFEL-UND KEKSANLAGEN-INDUSTRIE GMBH, 1210 Wien (AT)
(72) Erfinder: HAAS, Franz, Sen., A-1210 Wien (AT); HAAS, Johann, A-3400 Klosterneuburg (AT); TIEFENBACHER, Karl, A-1170 Wien (AT)
(74) Vertreter: Puchberger, Rolf
(86) Internationale Anmeldenummer: PCT/AT1999/000186
(87) Internationale Veröffentlichungsnummer: WO 2000/005966

(56) Entgegenhaltungen:
- DE-A- 2 508 533
- US-A- 4 442 132
- PATENT ABSTRACTS OF JAPAN vol. 014, no. 109 (C-0695), 28. Februar 1990 (1990-02-28) & JP 01 312960 A (MITSUBISHI KASEI CORP;OTHERS: 01), 18. Dezember 1989 (1989-12-18)
- PATENT ABSTRACTS OF JAPAN vol. 1998, no. 11, 30. September 1998 (1998-09-30) & JP 10 155410 A (SNOW BRAND MILK PROD CO LTD), 16. Juni 1998 (1998-06-16)

## Beschreibung

Die Erzeugung von weitgehend trocken ausgebackenen und daher knusprigspröden Waffeln (Flachwaffeln, Hohlwaffeln, Tüten-und Becher, Oblaten, Waffelröllchen, Phantasieformen, etc.) oder anderen Dauerbackwaren wie etwa Hohlhippen erfolgt nach lange bekannten Verfahren, bei denen eine fließfähige Backmasse, mitunter auch ein zäher bis fester Teig mittels beheizter Backformen innerhalb sehr kurzer Zeit, von unter 1 bis 3 Minuten, auf einen so niederen Restwassergehalt ausgebacken wird, daß sich die bekannt spröde Textur ergibt.

Physikalisch heißt dies, daß diese Produkte sich dann unterhalb ihrer Glasübergangstemperatur (Glaspunkt) befinden. Dieser Glaspunkt wird im wesentlichen durch die hochmolekularen Haupt-Inhaltsstoffe wie Stärke und Protein bestimmt, welche bei Raumtemperatur und Wassergehalten unter ca. 5 Gew.-% jedenfalls hart und spröde sind.

Durch Zunahme des Wassergehaltes wird aber dann selbst bei Raumtemperatur der Glaspunkt erreicht und überschritten. Dabei tritt das bekannte Zähwerden auf und in weiterer Folge -bei Wassergehalten im Bereich von etwa 10 bis 20 Gew.-% - auch das Weichwerden der Waffeln auf. Wasser ist also hier ein sehr effizientes Plastifizierungsmittel. Noch höhere Wassergehalte führen dann jedoch ab einem Wassergehalt von ca. 22 - 25 Gew.-% zu einem völligen Kollabieren der porösen Waffelstruktur, verbunden mit einer Deformation und Schrumpfung. Bekannt ist etwa das Durchweichen einer Eistüte oder die Lochbildung in Waffeln durch Wassertropfen.

Eine bruchfreie Verformung von Waffeln bei Raumtemperatur ist also nur dann möglich, wenn durch eine mäßige und schonende Feuchtigkeitsaufnahme etwa der Bereich von 10 bis 20 Gew.-% Wassergehalt erreicht wird. Nach einer Verformung könnte durch Abtrocknen wieder der knusprig-spröde Zustand erreicht und so die neue Form fixiert werden.

Eine besser handhabbare und daher häufig genutzte Möglichkeit, Waffeln und waffelähnliche dünnwandige Fein- und Dauerbackwaren herzustellen, die nach dem Backschritt noch nachgeformt werden können, etwa durch Wickeln, Rollen, Pressen, Stanzen, Prägen, Biegen, Falten oder Tiefziehen, ist das Mitverwenden höherer Zuckeranteile im Rezept der Backmassen und Teige, ein seit langem bekanntes Verfahren.

Hier wird das einfache Verfahren des Backens eines flachen Waffelstückes kombiniert mit der Möglichkeit, dieses bei der Backtemperatur oder knapp darunter durch den geschmolzenen Zuckeranteil zu plastifizieren und damit noch leicht mechanisch nachformen zu können, aber sodann durch einfaches und schnelles Abkühlen den Zucker erstarren zu lassen und damit die erhaltene Gestalt zu stabilisieren. Es wird ebenfalls ein sprödes, hartes Produkt erhalten, auch diese im wesentlichen aus einem Stärke-Zucker-Protein-Gemisch bestehenden Waffeln sind bei Raumtemperatur unter dem Glaspunkt. Der Zuckeranteil ist überdies meist als glasige Schmelze erstarrt und daher besonders knusprig in der Textur.

Die heute verbreitetsten, auf diese Weise nachgeformten zuckerhaltigen Waffelarten sind gerollte Eistüten sowie Hohlhippen (Waffelröllchen). Erstere haben häufig Zuckeranteile (Saccharose und andere Zucker) von meist 30 bis 50 Gew.-%, bezogen auf Mehl, Hohlhippen hingegen im Bereich von 60 Gew.-% bis über 100 Gew.-%.

Einige Angaben aus der Patentliteratur für Zuckeranteile, auf Mehl bezogen, in derartigen Produkten:

| | |
|---|---|
| AT 344633 | über 30 Gew.-%, bevorzugt 40 - 60 Gew.-%. |
| EP 12588 B1 | 25 - 60 Gew.-%, bevorzugt 35 - 45 Gew.-%. |
| US 4283430 | 75 - 400 Gew.-%. |
| DE 4239143 A1 | 40 Gew.-%. |
| DE 19539177 A1 | 40 Gew.-%. |
| WO 95/08268 | über 30 Gew.-%. |

Auch solche zuckerhältigen Backwaren werden infolge einer Feuchtigkeitsaufnahme und der damit verbundenen Plastifizierung durch Wasser - in analoger Weise wie oben für nicht in heißem Zustand nachformbare Produkte beschrieben - zäh bzw. weich.

Wie aus DE 19737180 A1 bekannt ist, kann bei ausreichendem Zuckergehalt durch Wieder-Erwärmen der Waffeln auf bevorzugt 130°C bis 150°C auch die Verformbarkeit wieder erreicht werden. Die dort verwendeten Ausführungsbeispiele zeigen einen Zuckeranteil (Saccharose, Sirup und Invertzucker) von etwa 60 Gew.-%, auf Mehl gerechnet.

All die genannten zuckerhältigen, heiß nachformbaren Waffeln sind in einer Vielzahl von Süßwaren, kombiniert mit Eis, Schokolade, Cremefüllungen, Glasuren und Dekoren usw. auf dem Markt. In diesen Kombinationen bereitet die technologische Notwendigkeit, erhebliche Zuckeranteile im Rezept einzusetzen keine Probleme.

Daneben gibt es aber seit langem einen steigenden Bedarf nach nicht süß schmeckenden nachgeformten Produkten dieser Art, etwa als würzig-pikante Knabberartikel mit oder ohne Füllungen in nicht süßen Geschmacksrichtungen, wie etwa mit Käse-, Fisch- oder Fleisch-Geschmacksnoten. Hier könnten nachgeformte Waffeln in vielen Fällen als Behälter oder als Träger von Textur und Geschmack ihren Beitrag zu einer gelungenen Kombination knusprig-harte Waffel /zarte Füllung liefern.

Es hat deshalb bisher nicht an Versuchen gefehlt, dies zu erreichen. Die Patentliteratur sowie die im Markt vorgestellten Produkte zeigen zwei prinzipielle Lösungswege, die der Fachmann einschlagen wird.
1. Den Versuch, den Süßegeschmack zu "übertönen", etwa durch Salz, scharfe Gewürze, diverse Würzsoßen und andere Würzmittel sowie die im nicht-süßen Bereich üblichen Geschmacksverstärker wie etwa Glutamate und Inosinate.
2. Die Verwendung von anderen Zuckern (Mono-, Disacchariden) mit geringerer Süßgeschmacks-Intensität als Saccharose, wie etwa Lactose, Glucose, Maltose, niedere Maltodextrine etc. und zusätzlich den starken Einsatz von Würzmitteln. In der Patentschrift AT 357131 findet sich etwa so ein Vorschlag, bei dem ca. 47 Gew.-% Glucosesirup, auf die eingesetzten Mehle und/oder Stärken gerechnet, sowie reichlich Salz und Gewürze zur Herstellung zuckerloser Hippen verwendet werden.

In beiden Fällen zeigen sich in der Erfahrung mehrere Probleme, die bisher keinen Erfolg solcher Produkte zugelassen haben:
a) Der auftretende Misch-Geschmackseindruck läßt keine sensorisch anspruchsvollen Produkte zu. Die vorhandene Süße ist merkbar. Der resultierende Geschmack wird entweder abgelehnt oder führt schnell zur Übersättigung.
b) Die statt Saccharose verwendeten Zucker sind entweder selbst noch relativ süß, wie etwa Glucose mit ca. 85 Gew.-% der Saccharose-Süßintensität, oder es müssen höhere Konzentrationen eingesetzt werden um die gleiche Wirkung in der Plastifizierung zu erzielen (Maltose, Lactose, niedere Maltodextrine).
c) Die beschränkte Löslichkeit kann ebenfalls eine Substitution begrenzen, wie beispielsweise im Fall der Lactose.

Es wurde nun überraschend gefunden, daß der Anteil des funktionellen Plastifizierungsmittels "Zucker(arten)" in solchen, im noch heißen oder durch Wiedererwärmen replastifizierten Zustand nachformbaren Waffeln durch Verwenden der Polyole Erythrit und Xylit teilweise oder ganz substituiert und auch wesentlich, oft auf weniger als 50 Gew.-%, reduziert werden kann.

Die Erfindung wird in den Ansprüchen 1-5 definiert.

Dies ist um so bemerkenswerter, als entsprechende Versuche mit einem anderen, im Bereich der Herstellung thermoplastischer Stärken als effizienten Weichmacher bekannten und daher naheliegenden Polyol - Glycerin - hier keinen Erfolg erbrachten. Mit Glycerin kann kein gleichartiges Waffelstück erhalten werden. Nur dünnere Waffeln sind überhaupt auszubacken, wobei überdies eine Blasenbildung und das Auftreten heller Flecke im Produkt sowie eine signifikante Klebeneigung festzustellen sind.

Zudem ist dies umso überraschender, da etwa Sorbit, ebenfalls ein Polyol, nicht als Zuckerersatz verwendbar ist, diese stark plastifizierende Wirkung also nicht zeigt.

Die erhöhte plastifizierende Wirkung der beiden Polyole kann zu einer vollen oder aber teilweisen Substitution von Saccharose und anderen Zuckerarten eingesetzt werden. Sinnvollerweise wird unter ca. 0,5 Gew.-% (auf Mehle und/oder Stärken gerechnet) eine Anwendung wenig sinnvoll sein, da dadurch nur mehr ca. 1 bis 1,5 Gew.-% Zucker substituiert werden. Die Konzentration nach oben wird bei vielen Anwendungen, wie etwa dem Rollen von Tüten, Waffelröllchen oder Hohlhippen auf ein Ausmaß begrenzt, das zumeist unterhalb der jetzt für Zucker üblichen Bereiche liegt (vgl. die Ausführungsbeispiele). Für andere Verformungsvorgänge wie etwa das Tiefziehen solcher Mehl/Stärke-basierter eßbarer Produkte sind jedoch auch höhere Konzentrationen einsetzbar.

Bei vollständigem Zuckerersatz beträgt erfindungsgemäß der Anteil an Erythrit und/oder Xylit, bezogen auf Mehl und/oder Stärke 12 bis 55 Gew.-%, vorzugsweise 13 bis 50 Gew.-%.

Dieser Anteil beträgt in Backmassen bzw. Teigen,
die für die Herstellung von Hohlhippen bestimmt sind, 20 bis 55 Gew.-%, vorzugsweise 22 bis 55 Gew.-%, insbesondere 25 bis 50 Gew.-%,
die für die Herstellung von gerollten Waffeltüten bestimmt sind, 12 bis 35 Gew.-%, vorzugsweise **12 bis 30 Gew.-%, insbesondere** 13 bis 25 Gew.-%,
die für die Herstellung von Waffelröllchen bestimmt sind, 12 bis 55 Gew.-%, vorzugsweise 14 bis 35 Gew.-%, insbesondere 15 bis 30 Gew.-%,
die für die Herstellung von tiefgezogenen Formkörpern bestimmt sind, 15 bis 55 Gew.-%, vorzugsweise 16 bis 4o Gew.-%, insbesondere 18 bis 35 Gew.-%.

Unter "Zucker" werden im Rahmen der Erfindung alle bisher bei der Waffelherstellung verwendeten Zuckerarten, wie Saccharose, andere Zuckerarten (Mono-, Disaccharide), Anteile von Sirupen (Stärkesirupe, Glucosesirupe, fructosehaltige Sirupe, Melassesirupe, Invertzucker, Honig), verstanden.

Erythrit, 1,2,3,4-Tetrahydroxybutan, Schmelzbereich 120°C - 126°C, ist ein weißes, kristallines Pulver, leicht löslich in Wasser. Sein Vorkommen in Früchten, Pilzen und Hefen ist bekannt. Erythrit wird heute bevorzugt fermentativ aus Stärke hergestellt. Erythrit schmeckt im Vergleich zu Saccharose nur mäßig süß, ca. 65 Gew.-% Süßeintensität als 10gew.-%ige Lösung, im festen Zustand (in Dauerbackwaren) noch weniger. Die stark negative Lösungswärme bedingt einen angenehm kühlen Geschmackseindruck im Mund.

Erythrit ist in Japan bereits als Lebensmittel zugelassen, in anderen Ländern ist dies zu erwarten. Dieses Polyol hat nur einen geringen für den Menschen verwertbaren Energieinhalt, etwa 10 Gew.-% im Vergleich zur Saccharose. Erythrit ist für Diabetiker geeignet, nicht kariogen, ist nicht hygroskopisch und wirkt kaum laxierend.

Nach Röper und Goossens (Starch/Stärke 45, 400ff,1993) sind Anwendungen von Erythrit unter anderem bei Süßungsmitteln, Schokoladen, Bonbons, Cremen sowie Kuchen abzusehen und zwar sowohl zur Herstellung energiereduzierter normaler Lebensmittel als auch von Diätprodukten, etwa für Diabetiker und Übergewichtige.

In der neueren Patentliteratur finden sich beispielsweise in EP 511761 B1, EP 688502 A1 und EP 753262 A2 Anwendungen von Erythrit in Instantfüllungen, Cremen oder Überzügen für Torten und andere Backwaren.

Xylit, 1,2,3,4,5-Pentahydroxypentan, CAS 87-99-0, Schmelzbereich 92°C - 96°C, ist ein weißes, kristallines Pulver, leicht löslich in Wasser. Es findet sich in Früchten und Gemüsen. Xylit schmeckt süß, ähnlich intensiv wie Saccharose und bewirkt bedingt durch seine stark negative Lösungswärme einen angenehm kühlen Geschmackseindruck im Mund.

Xylit ist als Süßstoff generell in Lebensmitteln zugelassen, ein ADI-Wert zur Begrenzung der täglich akzeptablen Dosis ist nicht spezifiziert. Lediglich für höhere Konzentrationen ist ein Warnhinweis wegen einer potentiell laxierenden Wirkung zu deklarieren. Xylit wirkt überdies nicht-kariogen bzw. anti-kariogen und findet deshalb heute verbreitet in zuckerfreien Bonbons und Kaugummis Verwendung.

Aus Patent Abstracts of Japan, vol. 014, no. 109 (C-0695) & JP-A-01312960 ist es bekannt, Erythrit bzw. Xylit als kalorienreduziertes Süßungsmittel bei der Herstellung von kalorienreduzierten und wenig kariogenen Kuchen einzusetzen.

Aus Patent Abstracts of Japan, vol. 1998, no. 11 & JP-A-10155410 ist es bekannt, Erythrit als Süßungsmittel bei der Herstellung von knusprigen, nicht nachformbaren Waffelblättern einzusetzen, um stärker süß schmeckende Waffelblätter zu erhalten.

Aus US-A-4 442 1 32 ist es bekannt Xylit als Süßstoff einer hauptsächlich aus Calciumcaseinat bestehenden Mehlersatzmischung zuzusetzen, die bei der Herstellung von Diabetiker-Backwaren, wie Kekse, Kuchen, Tortenböden etc., zur Verringerung der verdaubaren Kohlehydrate in der fertigen Backware verwendet wird.

Die Herstellung nachformbarer Waffeln oder Hohlhippen aus zuckerhältigen Backmassen ist bekannte Technologie mit folgenden grundlegenden Daten, welche auf die mit einer Teil- oder Vollsubstitution durch Erythrit und/oder Xylit hergestellten nachformbaren Produkte ebenfalls Anwendung findet.

### Hauptrohstoffe:

Wasser, Mehle und/oder Stärken und Zucker sind die Hauptrohstoffe. Es können neben bzw. statt Weizenmehl auch andere Mehle und/oder Stärken eingesetzt werden.

Neben oder statt Saccharose werden mitunter andere Zuckerarten (Mono-, Disaccharide) wie auch Anteile von Sirupen (Stärkesirupe, Glucosesirupe, fructosehaltige Sirupe, Melassesirupe, Invertzucker, Honig) verwendet.

### Mischen:

Zucker, Zuckerarten und Sirupe sowie diverse Kleinkomponenten (z.B. Salz, Backmittel, Emulgatoren, Fett, Nährstoffanreicherungen, ...) werden vorerst in Wasser gelöst bzw. dispergiert. Sodann wird das Mehl zudosiert und das Ganze zu einer homogenen Suspension von Mehl in einer Lösung der Zucker(arten) bereitet.

### Dosieren und Backen:

Die Backmasse wird in beheizte, geteilte Backformen oder beheizte Trommeln (Hohlhippen) dosiert und bei Temperaturen zwischen 140°C und 230°C auf einen Restwassergehalt von wenigen Gew.-%, bevorzugt unter 3 Gew.-%, ausgebacken. Die Backzeit liegt je nach Produkt und Backtemperatur im allgemeinen zwischen 40 Sekunden und 3 Minuten.

### Entformen und Nachformen:

Das heiße gebackene Produkt verläßt als ebenes endloses Band (Hohlhippen) oder als ebenes Stück die Backform und wird unmittelbar in einem Formwerkzeug etwa durch Wickeln, Rollen, Tiefziehen, Pressen, Prägen, Stanzen, Biegen, Falten im noch heißen Zustand, allenfalls im wiedererwärmten Zustand, in eine Form gebracht, welche auf einer anschließenden kurzen Kühlstrecke durch Erstarren des plastifizierend wirkenden Zuckeranteils fixiert wird - solange nicht durch Feuchtwerden oder stärkeres Erwärmen ein wieder plastisch Formbarwerden bewirkt wird.

Die überraschend starke plastifizierende Wirkung von Erythrit und/oder Xylit bringt im Falle des völligen Ersatzes von Zucker(arten) eine Reduktion der erforderlichen Einsatzmenge auf etwa die Hälfte bis ein Drittel der sonst benötigten Zucker mit sich.

Derzeit kann nur vermutet werden, daß diese Polyole besonders effiziente Plastifizierungsmittel für Stärke und Protein sind. Dies läßt sich auch deshalb vermuten, weil die Viskosität der Backmassen trotz des Ersatzes von Zucker durch um den Faktor 2-3 geringere Konzentrationen an Erythrit oder Xylit nicht ansteigt, tendenziell sogar leicht abnimmt. Backmassen mit einer derart reduzierten Dosierung an Saccharose werden hingegen höher viskos.

Im Falle des Erythrits als Zuckerersatz ist mit der reduzierten Einsatzmenge ein völliges Verschwinden des Süßgeschmacks verbunden, bei Xylit eine sehr starke Reduktion. Auch ein nur Teilersatz von Zucker(n) mit einer entsprechend geringeren Erythrit- oder Xylitmenge ist möglich.

Für die Herstellung gleich süßer, aber völlig zuckerfreier Produkte - mit Erythrit oder Xylit statt Zucker - ist im Rezept eine Kombination mit den bekannten Zukkeraustauschstoffen oder Süßstoffen erforderlich.

Durch die Verwendung von Erythrit können jetzt auch signifikant energiereduzierte nachformbare Dauerbackwaren erzeugt werden. Erythrit kann also als niederkalorischer Füllstoff fungieren.

Dauerbackwaren mit Erythrit und/oder Xylit sind überdies als Diätprodukte hinsichtlich Diabetikereignung und nicht- bzw. anti-kariogener Wirkung geeignet.

Weiters können bei ausschließlicher Verwendung von Stärken jetzt auch rein weiße, nachformbare
backoblatenartige Waffelprodukte,
Tüten,
Röllchen,
Tiefzieh- bzw. Stanzteile, etc.
hergestellt werden oder aber mit entsprechenden Farbzusätzen Artikel in verschiedenen, nicht durch die üblichen Brauntöne des karamelisierten Zuckers beeinträchtigten Farben gefertigt werden.

Die nachformbaren flächigen oder bandartigen Waffelstücke sind vor oder unmittelbar nach dem Nachformen einer Imprägnierung oder Beschichtung zugänglich, mit der etwa ihr Permeations- oder Siegelverhalten modifiziert oder ihr Geschmack beeinflußt werden kann.

Weiters gibt auch die Verwendung von Erythrit und/oder Xylit in Konzentrationen von nur wenigen Prozent (Basis Mehle und/oder Stärken) ebenfalls Vorteile für die Produktion, da der Süßegrad des Produktes gezielt reduziert werden kann.

Zudem kann durch die besser plastifizierende Wirkung eine Reduktion der für eine bestimmte Viskosität erforderlichen Wasserkonzentration erreicht werden. Dadurch wird mit zunehmender Konzentration der Polyole also weniger Energie verbraucht, die erforderliche Backzeit verkürzt und damit der Ausstoß erhöht.

Die in den nachfolgenden Beispielen angeführten Zahlen sind Gewichtsteile.

### Herstellen von Hohlhippen mit (teilweisem) Zucker-Ersatz 9 mm Durchmesser, 90 mm lang

auf einer Maschine vom Typ EW8 (Franz Haas Waffelmaschinen Industrie AG, Wien, Österreich). Solche Hohlhippen werden üblicherweise mit einem Zukkereinsatz im Bereich von 50 bis über 100 Gew.-% (Basis Mehle und/oder Stärken), vorzugsweise 60 - 80 Gew.-% hergestellt und sind daher intensiv süß im Geschmack (Rezept Nr. 1).

| **Rezept Nr.** | **1** | **2** | **3** | **4** | **5** | **6** | **7** | **8** |
|---|---|---|---|---|---|---|---|---|
| **Wasser** | 130 | 125 | 120 | 120 | 120 | 120 | 115 | 110 |
| **Weizenmehl**^{**1**} | 100 | 100 | 100 | 100 | 100 | 100 | 100 | 100 |
| **Stärke** | 10 | 10 | 5 | 5 | 0 | 5 | - | - |
| **Saccharose** | 70 | 45 | 30 | 20 | - | - | - | - |
| **Erythrit**^{**2**} | - | 5 | 12 | 18 | 23 | 10 | 26 | 50 |
| **Xylit**^{**3**} | - | - | - | | - | 20 | - | |
| **Milchpulver** | 5 | 5 | 5 | 5 | 5 | 5 | 5 | 5 |
| **Backmittel**^{**4**} | 0,5 | 0,5 | 0,5 | 0,5 | 0,5 | 0,5 | 1 | 1 |
| **Öl/Lecithin 5/2** | 0,7 | 0,7 | 0,7 | 0,7 | 0,7 | 0,7 | 0,7 | 0,7 |
| Rollbarkeit | ja | ja | ja | ja | ja ^{a} | ja | ja | ja ^{b} |
| Kleben | nein | nein | nein | nein | nein | nein | nein | nein |
| Zu weich | nein | nein | nein | nein | nein | nein | nein | nein ^{c} |
| Kommentar | Vergl. | | | | | | | |

| | | | | | | | | |
|---|---|---|---|---|---|---|---|---|
| ¹ Type 550, Vonwiller, Schwechat, Österreich | | | | | | | | |
| ² Cerestar, Vilvoorde, Belgien | | | | | | | | |
| ³ Roquette, Lille, Frankreich | | | | | | | | |
| ⁴ Molda 55, Molkerei Dahlenburg AG, Deutschland | | | | | | | | |
| ^{a} verschlechterte Rollbarkeit | | | | | | | | |
| ^{b} reißt leicht | | | | | | | | |
| ^{c} weiches Band | | | | | | | | |

Die Produkte mit einem Voll-Ersatz des Zuckers durch beispielsweise 26 Gew.-% Erythrit statt Zucker schmecken neutral, nicht süß und haben ein rundes, cerealientypisches Geschmacksbild. Ein rascher geschmacklicher Übersättigungseffekt tritt nicht ein. Das Füllen mit nicht-süßen Cremen ergibt ein geschmacklich rundes, ansprechendes Produkt.

### Herstellen von Hohlhippen mit (teilweisem) Zucker-Ersatz 9 mm Durchmesser, 90 mm lang

auf einer Maschine vom Typ EWB (Franz Haas Waffelmaschinen Industrie AG, Wien, Österreich). Solche Hohlhippen werden üblicherweise mit einem Zukkereirisatz im Bereich von 50 bis über 100 Gew.-% (Basis Mehle und/oder Stärken), vorzugsweise 60 - 80 Gew.-% hergestellt und sind daher intensiv süß im Geschmack (Rezept Nr. 1).

| **Rezept Nr.** | **9** | **10** | **11** | **12** | **13** | **14** | **15** | **16** |
|---|---|---|---|---|---|---|---|---|
| **Wasser** | 130 | 125 | 120 | 120 | 120 | 120 | 115 | 110 |
| **Weizenmehl**^{**1**} | 100 | 100 | 100 | 100 | 100 | 100 | 100 | 100 |
| **Stärke** | 10 | 10 | 5 | 5 | 0 | 5 | - | - |
| **Saccharose** | 10 | 45 | 30 | 20 | - | - | - | - |
| **Erythrit**^{**2**} | 10 | - | - | - | - | 15 | - | - |
| **Xylit**^{**3**} | 10 | 5 | 12 | 18 | 23 | 15 | 26 | 50 |
| **Milchpulver** | 5 | 5 | 5 | 5 | 5 | 5 | 5 | 5 |
| **Backmittel**^{**4**} | 0,5 | 0,5 | 0,5 | 0,5 | 0,5 | 0,5 | 1 | 1 |
| **Öl/Lecithin 5/2** | 0,7 | 0,7 | 0,7 | 0,7 | 0,7 | 0,7 | 0,7 | 0,7 |
| Rollbarkeit | ja | ja | ja | ja | ja ^{a} | ja | ja | ja ^{b} |
| Kleben | nein | nein | nein | nein | nein | nein | nein | nein |
| Zu weich | nein | nein | nein | nein | nein | nein | nein | nein ^{c} |
| Kommentar | Vergl. | | | | | | | |

| | | | | | | | | |
|---|---|---|---|---|---|---|---|---|
| ¹ Type 550, Vonwiller, Schwechat, Österreich | | | | | | | | |
| ² Cerestar, Vilvoorde, Belgien | | | | | | | | |
| ³ Roquette, Lille, Frankreich | | | | | | | | |
| ⁴ Molda 55, Molkerei Dahlenburg AG, Deutschland | | | | | | | | |
| ^{a} verschlechterte Rollbarkeit | | | | | | | | |
| ^{b} reißt leicht | | | | | | | | |
| ^{c} weiches Band | | | | | | | | |

Die Produkte mit einem Voll-Ersatz des Zuckers durch beispielsweise 26 Gew.-% Xylit statt Zucker schmecken wenig süß und haben ein rundes, cerealientypisches Geschmacksbild. Ein rascher geschmacklicher Übersättigungseffekt tritt nicht ein. Das Füllen mit nicht-süßen Cremen ergibt ein geschmacklich rundes, ansprechendes Produkt.

### Herstellen von gerollten Zuckertüten mit (teilweisem) Zucker-Ersatz

auf Backformen vom Typ TRO (Franz Haas Waffelmaschinen Industrie AG, Wien, Österreich). Das Produkt hat die Tütenform flat-top, 65 mm lang, Durchmesser 28 mm. Derartige gerollte Tüten erfordern üblicherweise einen Zuckerzusatz von über 30 bis zu 50 Gew.-% (Basis Mehle und/oder Stärken), vorzugsweise 35 bis 45 Gew.-% und schmecken daher deutlich süß (Vergleichsrezept Nr. 17).

| **Rezept Nr.** | **17** | **18** | **19** | **20** | **21** | **22** | **23** | **24** |
|---|---|---|---|---|---|---|---|---|
| **Wasser** | 120 | 120 | 120 | 120 | 115 | 115 | 115 | 110 |
| **Weizenmehl**^{**1**} | 100 | 100 | 100 | 100 | 100 | 100 | 100 | 100 |
| **Stärke** | 10 | 10 | 10 | 10 | 10 | 5 | 10 | 10 |
| **Saccharose** | 40 | 35 | 20 | - | - | - | - | - |
| **Erythrit**^{**2**} | - | 3 | 10 | 10 | 10 | 13,6 | 20 | 30 |
| **Xylit**^{**3**} | - | - | - | - | 10 | - | - | - |
| **Natriumbikarbonat** | 0,25 | 0,25 | 0,25 | 0,25 | 0,25 | 0,25 | 0,25 | 0,25 |
| **Lecithin** | 1,8 | 1,8 | 1,8 | 1,8 | 1,8 | 1,8 | 1,8 | 1,8 |
| **Fett** | 3 | 3 | 3 | 3 | 3 | 3 | 3 | 3 |
| Rollbarkeit | ja | ja | ja | nein | ja | ja ^{a} | ja | ja ^{b} |
| Kleben | nein | nein | nein | nein | nein | nein | nein | nein |
| Zu weich | nein | nein | nein | nein | nein | nein | nein | nein ^{c} |
| Kommentar | Vergl. | | | | | | | |

| | | | | | | | | |
|---|---|---|---|---|---|---|---|---|
| ¹ Type 550, Vonwiller, Schwechat, Österreich | | | | | | | | |
| ² Cerestar, Vilvoorde, Belgien | | | | | | | | |
| ³ Roquette, Lille, Frankreich | | | | | | | | |
| ^{a} verschlechterte Rollbarkeit | | | | | | | | |
| ^{b} sehr elastisch | | | | | | | | |
| ^{c} weiches Waffelstück | | | | | | | | |

Entsprechende Produkte mit einem Voll-Ersatz des Zuckers durch beispielsweise 20 Gew.-% Erythrit statt Zucker schmecken neutral, nicht süß und haben ein rundes, cerealientypisches Geschmacksbild. Ein schneller geschmacklicher Übersättigungseffekt tritt nicht ein. Das Füllen mit nicht-süßen Cremen ergibt ein geschmacklich rundes, ansprechendes Produkt.

### Herstellen von gerollten Zuckertüten mit (teilweisem) Zucker-Ersatz

auf Backformen vom Typ TRO (Franz Haas Waffelmaschinen Industrie AG, Wien, Österreich). Das Produkt hat die Tütenform flat-top, 65 mm lang, Durchmesser 28 mm. Derartige gerollte Tüten erfordern üblicherweise einen Zuckerzusatz von über 30 bis zu 50 Gew.-% (Basis Mehle und/oder Stärken), vorzugsweise 35 bis 45 Gew.-% und schmecken daher deutlich süß (Vergleichsrezept Nr. 17).

| **Rezept Nr.** | **25** | **26** | **27** | **28** | **29** | **30** | **31** | **32** |
|---|---|---|---|---|---|---|---|---|
| **Wasser** | 85 | 120 | 120 | 120 | 85 | 115 | 115 | 110 |
| **Weizenmehl**^{**1**} | 0 | 100 | 100 | 100 | 0 | 100 | 100 | 100 |
| **Stärke** | 100 | 10 | 10 | 10 | 100 | 5 | 10 | 10 |
| **Saccharose** | - | 35 | 20 | - | - | - | - | - |
| **Erythrit**^{**2**} | 20 | - | - | - | - | - | - | - |
| **Xylit**^{**3**} | - | 3 | 10 | 10 | 20 | 13,6 | 20 | 30 |
| **Natriumbikarbonat** | 0,25 | 0,25 | 0,25 | 0,25 | 0,25 | 0,25 | 0,25 | 0,25 |
| **Lecithin** | 1,8 | 1,8 | 1,8 | 1,8 | 1,8 | 1,8 | 1,8 | 1,8 |
| **Fett** | 3 | 3 | 3 | 3 | 3 | 3 | 3 | 3 |
| Rollbarkeit | ja | ja | ja | nein | ja | ja ^{a} | ja | ja ^{b} |
| Kleben | nein | nein | nein | nein | nein | nein | nein | nein |
| Zu weich | nein | nein | nein | nein | nein | nein | nein | nein ^{c} |
| Kommentar | weiß | | | | weiß | | | |

| | | | | | | | | |
|---|---|---|---|---|---|---|---|---|
| ¹ Type 550, Vonwiller, Schwechat, Österreich | | | | | | | | |
| ² Cerestar, Vilvoorde, Belgien | | | | | | | | |
| ³ Roquette, Lille, Frankreich | | | | | | | | |
| ^{a} verschlechterte Rollbarkeit | | | | | | | | |
| ^{b} sehr elastisch | | | | | | | | |
| ^{c} weiches Waffelstück | | | | | | | | |

Entsprechende Produkte mit einem Voll-Ersatz des Zuckers durch beispielsweise 20 Gew.-% Xylit statt Zucker schmecken neutral, kaum süß und haben ein rundes, cerealientypisches Geschmacksbild. Ein schneller geschmacklicher Übersättigungseffekt tritt nicht ein. Das Füllen mit nicht-süßen Cremen ergibt ein geschmacklich rundes, ansprechendes Produkt.

### Herstellen von Waffelröllchen mit (teilweisem) Zucker-Ersatz

auf Backformen vom Typ WRO (Franz Haas Waffelmaschinen Industrie AG, Wien, Österreich). Die Röllchen haben ca. 20 mm Durchmesser und sind 45 mm lang. Diese erfordern üblicherweise einen Zuckerzusatz von über 35 bis zu 60 Gew.-% (Basis Mehle und/oder Stärken), vorzugsweise 40 bis 50 Gew.-% und schmecken daher deutlich süß (Vergleichsrezept Nr. 33).

| **Rezept Nr.** | **33** | **34** | **35** | **36** | **37** | **38** | **39** | **40** |
|---|---|---|---|---|---|---|---|---|
| **Wasser** | 140 | 120 | 120 | 120 | 120 | 115 | 85 | 110 |
| **Weizenmehl**^{**1**} | 100 | 100 | 100 | 100 | 100 | 100 | 0 | 100 |
| **Stärke** | 25 | 10 | 10 | 10 | 10 | 5 | 100 | 10 |
| **Saccharose** | 50 | 25 | - | - | - | - | - | - |
| **Erythrit**^{**2**} | - | 12 | 16 | 23 | - | - | 25 | 33 |
| **Xylit**^{**3**} | - | - | - | - | 16 | 23 | - | - |
| **Natriumbikarbonat** | 0,2 | 0,2 | 0,2 | 0,2 | 0,2 | 0,2 | - | 0,2 |
| **Backmittel**^{**4**} | 2,5 | 2,5 | 2,5 | 2,5 | 2,5 | 2,5 | - | 2,5 |
| **Malzextrakt**^{**5**} | 4 | 4 | 4 | 4 | 4 | 4 | - | 4 |
| **Lecithin** | 1 | 1 | 1 | 1 | 1 | 1 | 0,5 | 1 |
| **Fett** | 8 | 8 | 8 | 8 | 8 | 8 | 2,5 | 8 |
| Rollbarkeit | ja | ja | ja ^{a} | ja | ja ^{a} | ja | ja | ja ^{b} |
| Kleben | nein | nein | nein | nein | nein | nein | nein | nein |
| Zu weich | nein | nein | nein | nein | nein | nein | nein | nein ^{c} |
| Kommentar | Vergl. | | | | | | weiß | |

| | | | | | | | | |
|---|---|---|---|---|---|---|---|---|
| ¹ Type 550, Vonwiller, Schwechat, Österreich | | | | | | | | |
| ² Cerestar, Vilvoorde, Belgien | | | | | | | | |
| ³ Roquette, Lille, Frankreich | | | | | | | | |
| ⁴ Molda 55, Molkerei Dahlenburg AG, Deutschland | | | | | | | | |
| ⁵ Malzextrakt flüssig, STAMAG, Wien, Österreich | | | | | | | | |
| ^{a} verschlechterte Rollbarkeit | | | | | | | | |
| ^{b} sehr elastisch | | | | | | | | |
| ^{c} weiches Waffelstück | | | | | | | | |

Entsprechende Produkte mit einem Voll-Ersatz des Zuckers durch beispielsweise 23 Gew.-% Erythrit oder Xylit statt Zucker schmecken neutral, nicht süß und haben ein rundes, cerealientypisches Geschmacksbild. Ein schneller geschmacklicher Übersättigungseffekt tritt nicht ein.

### Herstellen von tiefgezogenen, becherförmigen Hohlkörpern mit (teilweisem) Zucker-Ersatz

in einer Technikumseinrichtung. Die Produkte haben ca. 65 mm Durchmesser und sind etwa 80 mm hoch. Diese erfordern üblicherweise einen Zuckerzusatz von über 40 bis zu 80 Gew.-% (Basis Mehle und/oder Stärken), vorzugsweise 45 bis 65 Gew.-% und schmecken daher intensiv süß (Vergleichsrezept Nr. 41).

| **Rezept Nr.** | **41** | **42** | **43** | **44** | **45** | **46** | **47** | **48** |
|---|---|---|---|---|---|---|---|---|
| **Wasser** | 110 | 100 | 100 | 95 | 100 | 95 | 85 | 90 |
| **Weizenmehl**^{**1**} | 100 | 100 | 100 | 100 | 100 | 100 | 0 | 100 |
| **Stärke** | 5 | 5 | 5 | 5 | 5 | 5 | 100 | 5 |
| **Saccharose** | 60 | 28 | - | - | - - | - | - | - |
| **Erythrit**^{**2**} | - | 10 | 18 | 26 | - | - | 25 | 32 |
| **Xylit**^{**3**} | - | - | - | - | 18 | 26 | - | - |
| **Natriumbikarbonat** | 0,2 | 0,2 | 0,2 | 0,2 | 0,2 | 0,2 | - | 0,2 |
| **Backmittel**^{**4**} | 1 | 1 | 1 | 1 | 1 | 1 | - | 1 |
| **Lecithin** | 1 | 1 | 1 | 1 | 1 | 1 | 0,5 | 1 |
| **Fett** | 6 | 6 | 6 | 6 | 6 | 6 | 2,5 | 6 |
| Rollbarkeit | ja | ja | ja ^{a} | ja | ja ^{a} | ja | ja | ja |
| Kleben | nein | nein | nein | nein | nein | nein | nein | nein |
| Zu weich | nein | nein | nein | nein | nein | nein | nein | nein ^{b} |
| Kommentar | Vergl. | | | | | | weiß | |

| | | | | | | | | |
|---|---|---|---|---|---|---|---|---|
| ¹ Type 550, Vonwiller, Schwechat, Österreich | | | | | | | | |
| ² Cerestar, Vilvoorde, Belgien | | | | | | | | |
| ³ Roquette, Lille, Frankreich | | | | | | | | |
| ⁴ Molda 55, Molkerei Dahlenburg AG, Deutschland | | | | | | | | |
| ^{a} verschlechterte Nachformbarkeit | | | | | | | | |
| ^{b} weiches Waffelstück, gut nachformbar | | | | | | | | |

Entsprechende Produkte mit einem Voll-Ersatz des Zuckers durch beispielsweise 26 Gew.-% Erythrit oder Xylit statt Zucker schmecken neutral, nicht süß und haben ein rundes, cerealientypisches Geschmacksbild. Ein schneller geschmacklicher Übersättigungseffekt tritt nicht ein.

## Patentansprüche

1. Verwendung von Erythrit und/oder Xylit in Backmassen oder Teigen für Dauerbackwaren aus Mehlen und/oder Stärken, welche Backwaren nach dem Backschritt im noch plastischen oder durch Wiedererwärmen wieder plastisch gewordenen Zustand, z.B. durch Wickeln, Rollen, Pressen, Stanzen, Prägen, Biegen, Falten oder Tiefziehen verformt werden, als teilweiser oder vollständiger Zuckerersatz ***zum Zwecke der Plastifizierung,*** wobei der Anteil an Erythrit und/oder Xylit bei vollständigem Ersatz des Zuckers 12 bis 55 Gew.-%, insbesondere 13 bis 50 Gew.-%, bezogen auf Mehl und/oder Stärke beträgt.

2. Verwendung gemäß Anspruch 1, wobei der Anteil von Erythrit und/oder Xylit bei vollständigem Ersatz des Zuckers bei Backmassen oder Teigen, die für die Herstellung von Hohlhippen bestimmt sind, 20 bis 55 Gew.-%, vorzugsweise 22 bis 55 Gew.-%, insbesondere 25 bis 50 Gew.-%, bezogen auf Mehl und/oder Stärke beträgt.

3. Verwendung gemäß Anspruch 1, wobei der Anteil von Erythrit und/oder Xylit bei vollständigem Ersatz des Zuckers bei Backmassen oder Teigen, die für die Herstellung von gerollten Waffeltüten bestimmt sind, 12 bis 35 Gew.-%, vorzugsweise 12 bis 30 Gew.-%, insbesondere 13 bis 25 Gew.-%, bezogen auf Mehl und/oder Stärke beträgt.

4. Verwendung gemäß Anspruch 1, wobei der Anteil von Erythrit und/oder Xylit bei vollständigem Ersatz des Zuckers bei Backmassen oder Teigen, die für die Herstellung von Waffelröllchen bestimmt sind, 12 bis 55 Gew.-%, vorzugsweise 14 bis 35 Gew.-%, insbesondere 15 bis 30 Gew.-%, bezogen auf Mehl und/oder Stärke beträgt.

5. Verwendung gemäß Anspruch 1, wobei der Anteil von Erythrit und/oder Xylit bei vollständigem Ersatz des Zuckers bei Backmassen oder Teigen, die für die Herstellung von tiefgezogenen Formkörpern bestimmt sind, 15 bis 55 Gew.-%, vorzugsweise 16 bis 40 Gew.-%, insbesondere 18 bis 35 Gew.-%, bezogen auf Mehl und/oder Stärke beträgt.

## Claims

1. Use of erythritol and/or xylitol in baking mixtures or doughs for long-life baked products which are made from flours and/or starches and which are formed, for example, by means of winding, rolling, pressing, punching, stamping, bending, folding or deep-drawing, after the baking step whilst still in the plastic state or in the state in which they have become plastic again owing to reheating, as a partial or complete sugar replacement for the purposes of plasticising, the proportion of erythritol and/or xylitol when the sugar is completely replaced being from 12 to 55% by weight, in particular from 13 to 50% by weight, relative to flour and/or starch.

2. Use according to claim 1, the proportion of erythritol and/or xylitol when the sugar is completely replaced in baking mixtures or doughs which are intended for the production of hollow dough cakes being from 20 to 55% by weight, preferably from 22 to 55% by weight, in particular from 25 to 50% by weight, relative to flour and/or starch.

3. Use according to claim 1, the proportion of erythritol and/or xylitol when the sugar is completely replaced in baking mixtures or doughs which are intended for the production of rolled waffle cornets being from 12 to 35% by weight, preferably from 12 to 30% by weight, in particular from 13 to 25% by weight, relative to flour and/or starch.

4. Use according to claim 1, the proportion of erythritol and/or xylitol when the sugar is completely replaced in baking mixtures or doughs which are intended for the production of waffle rolls being from 12 to 55% by weight, preferably from 14 to 35% by weight, in particular from 15 to 30% by weight, relative to flour and/or starch.

5. Use according to claim 1, the proportion of erythritol and/or xylitol when the sugar is completely replaced in baking mixtures or doughs which are intended for the production of deep-drawn shaped members being from 15 to 55% by weight, preferably from 16 to 40% by weight, in particular from 18 to 35% by weight, relative to flour and/or starch.

## Revendications

1. Utilisation d'Erythritol et/ou de Xylitol dans des compositions de boulangerie ou des pâtes pour des produits de boulangerie de longue conservation, composés de farine et/ou d'amidons, ces produits de boulangerie étant après la cuisson déformés à l'état encore plastique ou rendus plastique à nouveau par réchauffement, par exemple par enroulement, calandrage, pressage, estampage, gaufrage, courbure, pliage ou emboutissage profond, comme substituts partiels ou complets du sucre en vue de la plastification, la proportion d'Erythritol et/ou de Xylitol lorsque le sucre est remplacé complètement étant de 12 à 55 % en poids, notamment de 13 à 50 % en poids rapporté à la farine et/ou à l'amidon.

2. Utilisation suivant la revendication 1, dans laquelle la proportion d'Erythritol et/ou de Xylitol lorsque le sucre est remplacé complètement dans des compositions de boulangerie ou des pâtes qui sont destinées à la préparation de cigarettes russes est de 20 à 55 % en poids, de préférence de 22 à 55 % en poids notamment de 25 à 50 % en poids rapporté à la farine et/ou à l'amidon.

3. Utilisation suivant la revendication 1, dans laquelle la proportion d'Erythritol et/ou de Xylitol lorsque le sucre est remplacé complètement dans des compositions de boulangerie ou dans des pâtes, qui sont destinées à la fabrication de cornets enroulés de crème glacée, est de 12 à 35 % en poids, de préférence de 12 à 30 % en poids, notamment de 13 à 25 % en poids rapporté à la farine et/ou à l'amidon.

4. Utilisation suivant la revendication 1, dans laquelle la proportion d'Erythritol et/ou de Xylitol, lorsque tout le sucre est remplacé complètement dans des compositions de boulangerie ou de pâtes, qui sont destinées à la fabrication de rouleaux pour des crèmes glacées, est de 12 à 55 % en poids, de préférence de 14 à 35 % en poids, notamment de 15 à 30 % en poids rapporté à la farine et/ou à l'amidon.

5. Utilisation suivant la revendication 1, dans laquelle la proportion d'Erythritol et/ou de Xylitol, lorsque le sucre est remplacé complètement dans des compositions de boulangerie ou de pâtes, pour la fabrication de corps façonnés par emboutissage profond, est de 15 à 55 % en poids, de préférence de 16 à 40 % en poids, notamment de 18 à 35 % en poids rapporté à la farine et/ou à l'amidon.
